# EUROPEAN PATENT SPECIFICATION

(11) **EP 1 174 320 B1**
(45) Date of publication and mention of the grant of the patent: **30.03.2005**
(21) Application number: 01202492.3
(22) Date of filing: 29.06.2001
(51) Int. Cl.: B60T 11/10, B60T 11/20, B60T 11/28

(54) **Brake assembly for vehicle**
Fahrzeugbremseinheit
Ensemble de frein pour véhicule

(30) Priority: 21.07.2000 IT BO000449
(43) Date of publication of application: 23.01.2002
(73) Proprietor: CNH Italia S.p.A., 41100 Modena (IT)
(72) Inventor: Brancolini, Emiliano, 41030 Modena (Sorbara) (IT)
(74) Representative: Vandenbroucke, Alberic

(56) References cited:
- EP-A- 0 030 883
- DE-A- 1 480 312
- DE-A- 3 737 579
- FR-A- 2 470 884
- US-A- 3 360 303

## Description

The present invention relates to a brake assembly for a vehicle, such as an agricultural tractor.

More specifically, the present invention relates to a vehicle of the type comprising a hydraulic utility system for supplying a pressurized fluid to a number of user devices; two axles, each having at least one wheel; a brake assembly for each of the two axles; and valve means for selectively controlling operation of a first of the brake assemblies in response to a signal from a second of the brake assemblies.

The valve means normally comprise a tubular body with a longitudinal axis; and a piston fitted to slide axially inside the tubular body and shaped to define, together with the tubular body, a first, a second, and a third variable-volume chamber arranged successively in that order along said longitudinal axis.

In operation, the first chamber receives the signal from the second brake assembly; the second chamber communicates with the hydraulic utility system; and the third chamber has an inlet communicating with an oil supply tank, and an outlet communicating with the first brake assembly.

In response to the signal from the second brake assembly, the piston is moved along the longitudinal axis to connect the second chamber to the hydraulic utility system, so that the total pressure exerted on the piston by the pressurized oil fed to the first and second chambers compresses the oil fed to the third chamber from the supply tank, so as to activate the first brake assembly.

A major drawback, therefore, of known vehicles of the above type lies in the valve means being relatively complex and expensive, by requiring a supply tank and a relatively large number of hydraulic connecting pipes. As a result, the arrangement is difficult to install, especially on vehicles in which the first brake assembly is provided as optional equipment as opposed to a standard part.

US 3.360.303 relates to a braking arrangement on a tractor-trailer combination. The trailer comprises a pressurized fluid circuit for controlling the operation of a servo unit, such as a farming implement hoist system, which is installed on the trailer. The tractor (being the towing vehicle), is provided with a customary brake circuit acting on the wheels of the tractor. The trailer on the other hand comprises a dedicated brake valve which is incorporated in the pressurized fluid circuit and in its neutral position allows oil to flow towards the servo unit. However, upon braking the tractor, pressurized brake fluid from the tractor is directed towards a pilot entrance of the dedicated brake valve of the trailer, thereby shifting the valve to a position for diverting the pressurized fluid circuit of the trailer towards the trailer brakes. In so doing, the supply of pressurized fluid towards the servo unit is fully interrupted. Although this might be tolerated on a trailer, it certainly would not be acceptable on a self-propelled vehicle, such as a tractor, to disrupt the operation of user devices installed on the vehicle, even if only temporarily during a braking action of the vehicle.

It is therefore an object of the present invention to provide a vehicle designed to eliminate the aforementioned drawbacks.

According to a first aspect of the present invention, there is provided a brake assembly for a self-propelled vehicle, the vehicle comprising :
- two axles each having at least one wheel;
- first and second brake assemblies, one for each of said respective axles; each braking assembly comprising a braking member associated with each said wheel and said second brake assembly comprising first and second operator-activated pedal devices;
- a hydraulic utility system for supplying a pressurized fluid to a number of user devices, separate from the brake assembly;
- first valve means for feeding said pressurized fluid directly to said first brake assembly in response to a signal from said second brake assembly; said signal being generated as a result of generally simultaneous activation of said first and second operator-activated pedal devices; and
- said first valve means is operable to feed said pressurized fluid to said first brake assembly without interrupting the supply of pressurized fluid to said number of user devices.

According to a second aspect of the present invention, a method is provided of braking a self-propelled vehicle as defined in claim 10.

A non-limiting embodiment of the present invention will now be described by way of example with reference to the accompanying drawings, in which:
Figure 1 shows a schematic view in perspective of a preferred embodiment of the vehicle braking system according to the present invention;
Figures 2 and 3 show two longitudinal sections of a detail of Figure 1 in two different operating positions; and
Figure 4 shows a graph of the oil pressure in the two brake assemblies and in the hydraulic utility system of the Figure 1 vehicle.

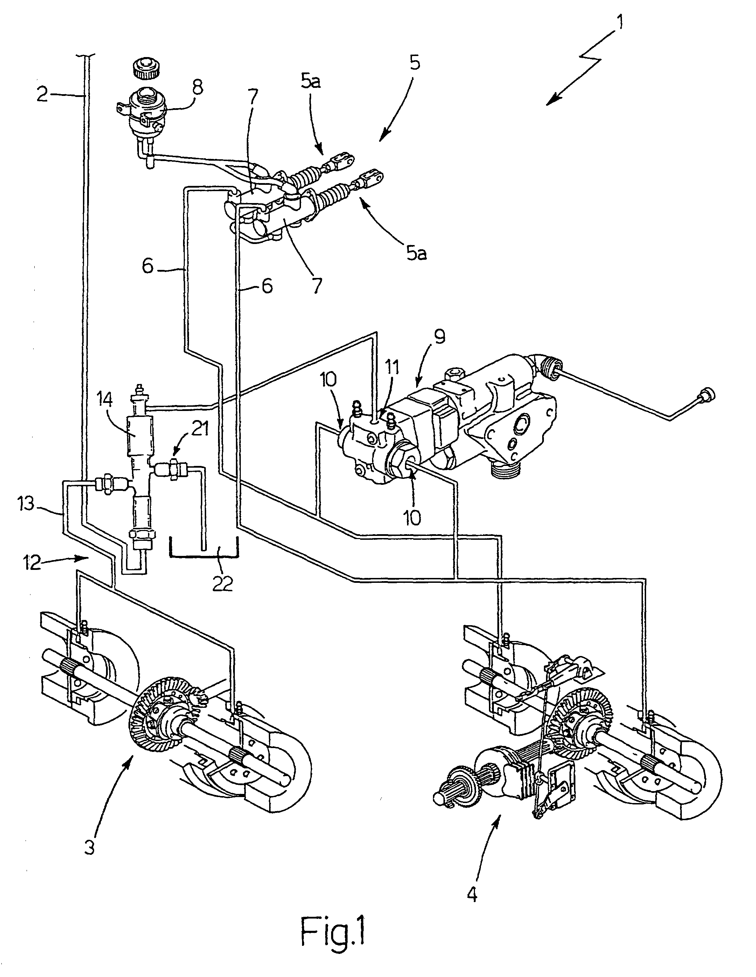

Reference number 1 in Figure 1 indicates as a whole a vehicle having a hydraulic utility system 2 for supplying pressurized oil to a number of user devices (not shown) defined, for example, by transmission clutches and/or power take-off clutches of vehicle 1.

Vehicle 1 further comprises two axles 3 and 4, each having two wheels (not shown); and a brake assembly 5 for braking the wheels (not shown) of axle 4. Assembly 5 comprises two known brake devices 5a, each relative to a respective wheel of axle 4, and each comprising a braking member (not shown in detail) for braking the respective wheel, circuits 6 for feeding pressurized oil to the respective braking member, and a main cylinder 7 for feeding pressurized oil to each respective circuit 6.

Vehicle 1 additionally comprises a tank 8 for feeding oil to both cylinders 7, which are activated selectively and independently by respective known pedal controls (not shown). A known timing valve 9 has two inlets 10, each communicating with one of the circuits 6, and an outlet 11 communicating with a brake assembly 12 for braking the wheels (not shown) of axle 3. More specifically, valve 9 is designed to only allow both inlets 10 to communicate with outlet 11 when both brake devices 5a are activated by the operator.

Assembly 12 comprises two braking members (not shown in detail) for braking the respective wheels (not shown); a circuit 13 for feeding pressurized oil to the braking members; and a proportional valve 14 for connecting hydraulic system 2 to circuit 13 in response to a signal from outlet 11 of timing valve 9.

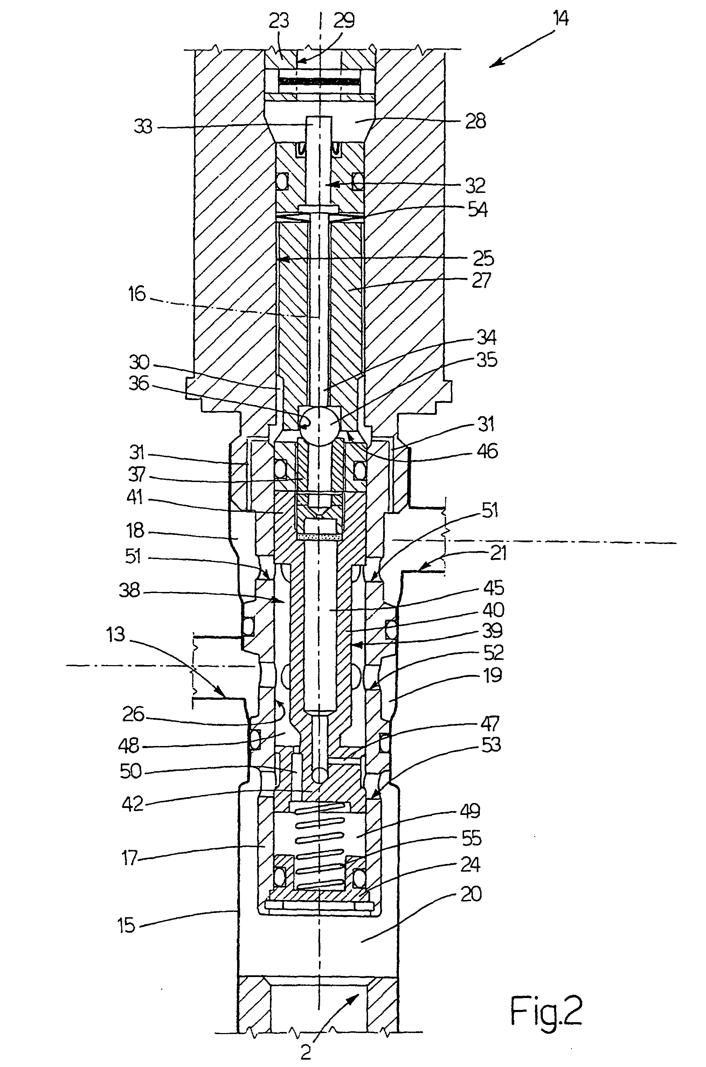

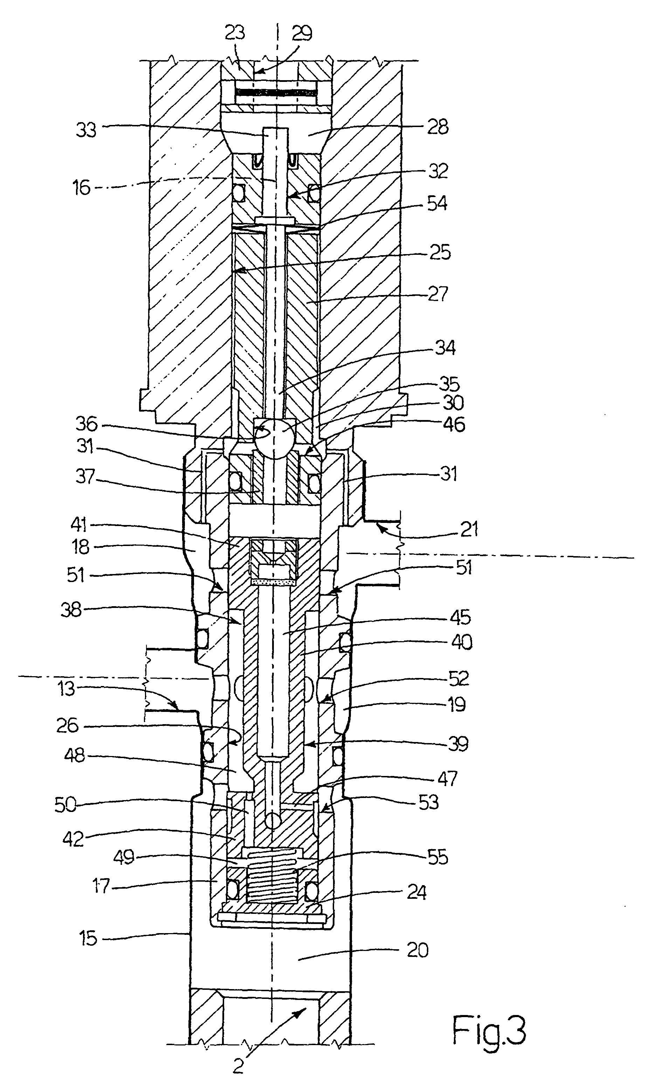

With reference to Figures 2 and 3, valve 14 comprises a tubular supporting frame 15 having a substantially vertical longitudinal axis 16 and a tubular body 17 fitted in angularly and axially fixed manner to frame 15 and coaxial with axis 16.

Together with frame 15, body 17 defines three chambers 18, 19, 20 arranged successively in that order along axis 16. Chamber 18 communicates, via an outlet 21, with an oil return tank 22 (Figure 1), chamber 19 communicates with circuit 13 whereas chamber 20 communicates with hydraulic system 2.

Body 17 is defined at the top and bottom ends by respective closing members 23 and 24 crosswise to axis 16, and comprising a top portion 25 and a bottom portion 26 arranged successively along axis 16.

Valve 14 further comprises a sleeve 27, which is connected in axially and angularly fixed manner to portion 25, is coaxial with axis 16 and defines, together with body 17 and member 23, a substantially cylindrical chamber 28 communicating with outlet 11 via an inlet 29 formed through member 23. Sleeve 27 additionally defines, together with body 17, an annular chamber 30 communicating with chamber 18 via a number of conduits 31 formed through body 17.

Sleeve 27 is engaged in axially sliding manner by a cylindrical push-rod 32, which has a top end 33 projecting axially inside chamber 28, and a bottom end 34 contacting a substantially spherical plug 35. Plug 35 is housed in a cylindrical cavity 36 formed radially on the inner surface of sleeve 27, and is supported underneath by a bush 37 connected in axially and angularly fixed manner to the bottom end of sleeve 27.

Valve 14 further comprises a slide 38 in turn comprising a tubular body 39, which is coaxial with axis 16, is mounted to slide axially inside portion 26, and comprises a narrow central portion 40, and two wider end portions 41, 42 at opposite ends of portion 40.

Together with body 17 and sleeve 27, slide 38 defines a variable-volume chamber 45, which communicates with chamber 30, and hence outlet 21, via a number of holes 46 extending radially through sleeve 27, and communicates with chamber 20, and hence system 2, via a conduit 47 extending radially through portion 42.

Together with body 17, slide 38 also defines two chambers 48, 49 arranged successively along axis 16 and communicating with each other via a conduit 50 formed through portion 42 and parallel to axis 16. More specifically, chamber 49 is a variable-volume chamber while chamber 48 communicates, as will be described in detail further on, with outlet 21, circuit 13 and system 2 via respective radial holes 51, 52 and 53 formed through body 17.

Operation of vehicle 1 will now be described with reference to Figures 2 and 3, and starting from an instant (Figure 2) in which:
- timing valve 9 is set to a closed position wherein no pressurized oil is supplied by circuits 6 to chamber 28;
- push-rod 32 is set to a rest position contacting but exerting no pressure on plug 35; and
- slide 38 is set to a raised position wherein portion 41 substantially contacts sleeve 27.

When slide 38 is set to the raised position, then the pressurized oil fed by system 2 to chamber 20 flows into chamber 45 through holes 53 and along conduit 47. From chamber 45, the oil seeps between plug 35 and the seat defined by bush 37, and flows into chamber 30 through holes 46 and hence into chamber 18, i.e. outlet 21, along conduits 31. Contemporarily, circuit 13 communicates with outlet 21 via chamber 19, holes 52, chamber 48, holes 51 and chamber 18, whereby any pressurized oil in circuit 13 is guided to the tank 22.

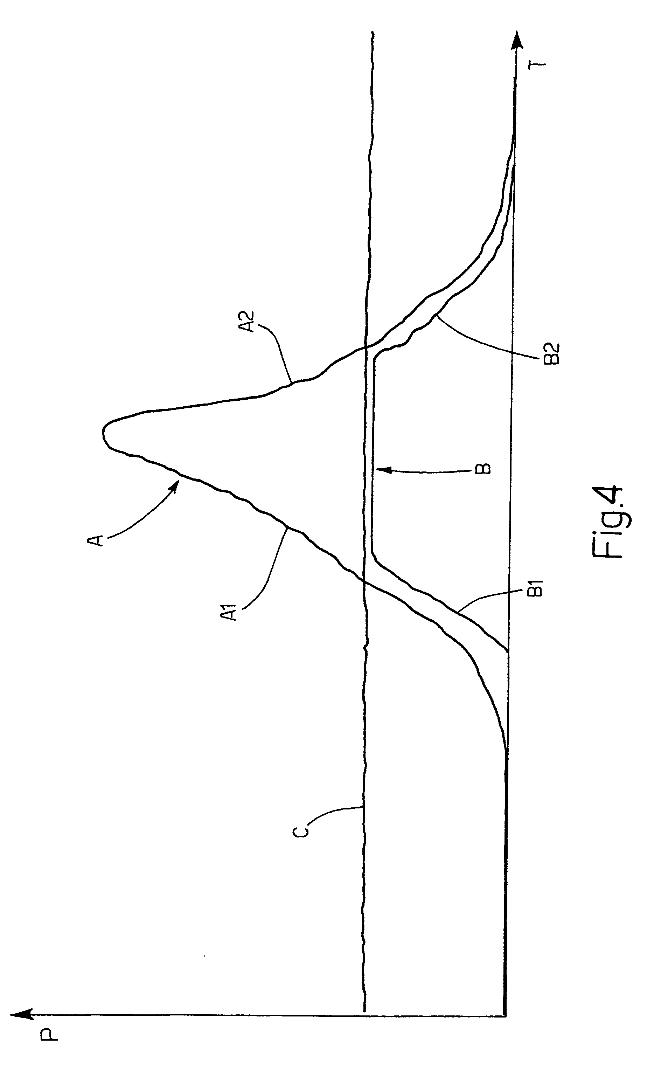

At this point, when both brake devices 5a for braking the wheels (not shown) of axle 4 are activated gradually (portion A1 of curve A in Figure 4), timing valve 9 moves into an open position in which circuits 6 communicate with chamber 28 to move push-rod 32, in opposition to a return spring 54, into a work position in which push-rod 32 exerts a given pressure on plug 35 to prevent the pressurized oil in chamber 45 from seeping into outlet 21 and, hence, into tank 22.

With reference to Figure 3, slide 38 is moved, by the pressurized oil in chamber 45 and in opposition to a return spring 55, into a lowered position in which top portion 41 of body 39 is positioned to prevent circuit 13 from communicating with outlet 21, and hence with tank 22; and in which bottom portion 42 of body 39 is positioned to connect chamber 48, and hence circuit 13, to chamber 20 to activate brake assembly 12 of axle 3.

In connection with the above, it should be pointed out that conduit 50 allows the pressurized oil in chamber 48 to flow into chamber 49 and exert upward pressure on slide 38 in opposition to the downward pressure exerted on slide 38 by the pressurized oil in chamber 45.

Valve 14 is therefore a proportional valve, which, as a function of the pressure applied by the operator on the pedal controls (not shown) of devices 5a for braking the wheels of axle 4, allows the pressure of circuit 13 to increase gradually (portion B1 of curve B in Figure 4) up to the maximum pressure (curve C in Figure 4) of hydraulic utility system 2 of vehicle 1.

Portion A2 of curve A and portion B2 of curve B show the pressure in circuits 6 and 13 respectively when the pedal controls (not shown) are released.

Valve 14 therefore does not require an additional tank from which to draw pressurized oil to activate brake assembly 12 of axle 3, since assembly 12 is activated directly, through the valve 14, by the pressurized oil supplied to circuit 13 by the hydraulic utility system 2 of vehicle 1.

## Claims

1. A brake assembly for a self-propelled vehicle, the vehicle having two axles (3, 4), each having at least one wheel; said brake assembly comprising:
- first and second brake assemblies (12, 5), one for each of said respective axles (3, 4); each braking assembly comprising a braking member associated with each said wheel and said second brake assembly (5) comprising first and second operator-activated pedal devices (5a);
- a hydraulic utility system (2) for supplying a pressurized fluid to a number of user devices, separate from the brake assembly;
- first valve means (14) for feeding said pressurized fluid directly to said first brake assembly (12) in response to a signal from said second brake assembly (5); said signal being generated as a result of generally simultaneous activation of said first and second operator-activated pedal devices (5a); and
- said first valve means (14) is operable to feed said pressurized fluid to said first brake assembly (12) without interrupting the supply of pressurized fluid to said number of user devices.

2. A brake assembly according to claim 1, **characterized in that** each said axle (3, 4) has a pair of wheels; second valve means (9) being interposed between said first (12) and said second (5) brake assembly to generate said signal when both said pedal devices (5a) are activated.

3. A brake assembly according to claim 1 or 2, **characterized in that** said first valve means (14) is operable, in the absence of said signal, to allow pressurised fluid from the hydraulic utility system (2) to flow to a tank (22).

4. A brake assembly according to any of the preceding claims, **characterized in that** said first valve means (14) is operable, in the presence of said signal, to prevent pressurised fluid from the hydraulic utility system (2) to flow to a tank (22).

5. A vehicle according to any of the preceding claims, **characterized in that** said first valve means (14) comprise supporting means (15, 17); and a slide (38) movable, along the supporting means (15, 17), between a closed position in which said hydraulic utility system (2) is cut off hydraulically from said first brake assembly (12), and an open position in which the hydraulic system (2) communicates with the first brake assembly (12).

6. A vehicle according to claim 5, **characterized in that** said slide (38) defines, together with said supporting means (15, 17), at least a first (45) and a second (49) chamber communicating with said hydraulic utility system (2) when the slide (38) is in the open position.

7. A vehicle according to claim 6, **characterized in that**, when said slide (38) is in the open position, the pressurized fluid in said first (45) and said second (49) chamber moves the slide (38) between the open and closed position with a first and second thrust respectively; said first (45) and said second (49) chamber being designed in such a manner that said first thrust is greater than said second thrust.

8. A vehicle according to any of the preceding claims, **characterized in that** said second brake assembly (5) supplies a further pressurized fluid to said first valve means (14); the first valve means (14) being configured to prevent said pressurized fluid and said further pressurized fluid from coming into contact with each other.

9. A vehicle according to claim 4 and any claim dependent directly or indirectly therefrom, **characterized in that**, in the presence of said signal, the pressurized fluid from said hydraulic utility system is operable to bring said first valve means in a condition to feed said pressurized fluid to said first brake assembly (12).

10. A method of braking a self-propelled vehicle including a brake assembly as in claim 1, said vehicle comprising :
- two axles (3,4), each having at least one wheel;
- second valve means (9) associated with a second one (5) of said brake assemblies (12, 5) and
**characterized in that** the method comprises the steps of :
- actuating said second one (5) of said brake assemblies (12, 5);
- generating a signal by means of said second valve means (9);
- feeding said pressurized fluid through said first valve means (14) to said first brake assembly (12) in response to said signal; and
- during said feeding step, continuing to supply pressurized fluid to said number of user devices.

11. A method according to claim 10, **characterized in that** said feeding step comprises the further steps of :
- blocking the return flow of pressurized fluid to a tank (22) through said first valve means (14);
- allowing said pressurized fluid to build up pressure inside said first valve means (14);and
- opening said first valve means (14) by means of the build-up pressure to feed said pressurized fluid to said first brake assembly (12).

## Patentansprüche

1. Bremseinheit für ein selbstfahrendes Fahrzeug, wobei das Fahrzeug zwei Achsen (3, 4) aufweist, die jeweils zumindest ein Rad aufweisen; wobei die Bremseinheit Folgendes umfasst:
- erste und zweite Bremsbaugruppen (12, 5), eine für jede der jeweiligen Achsen (3, 4), wobei jede Bremsbaugruppe ein Bremsbauteil umfasst, das jedem der Räder zugeordnet ist, und die zweite Bremsbaugruppe (5) erste und zweite vom Fahrer betätigte Pedaleinrichtungen (5a) aufweist;
- ein hydraulisches Versorgungssystem (2) zur Lieferung eines unter Druck stehenden Strömungsmittels an einer Anzahl von Nutzeinrichtungen, getrennt von der Bremsbaugruppe;
- erste Ventileinrichtungen (14) zur Zuführung des Druckströmungsmittels direkt an die erste Bremsbaugruppe (12) in Abhängigkeit von einem Signal von der zweiten Bremsbaugruppe (5); wobei das Signal als Ergebnis einer allgemein gleichzeitigen Aktivierung der ersten und zweiten vom Fahrer betätigten Pedaleinrichtungen (5a) erzeugt wird; und
- wobei die erste Ventileinrichtung (14) betreibbar ist, um das Druckströmungsmittel an die erste Bremsbaugruppe (12) zu liefern, ohne die Zufuhr von Druckströmungsmittel an die Anzahl von Nutzeinrichtungen zu unterbrechen.

2. Bremseinheit nach Anspruch 1, **dadurch gekennzeichnet, dass** jede Achse (3, 4) ein Paar von Rädern aufweist, dass zweite Ventileinrichtungen (9) zwischen der ersten (12) und der zweiten (5) Bremsbaugruppe angeordnet sind, um das Signal zu erzeugen, wenn beide Pedaleinrichtungen (5a) betätigt werden.

3. Bremseinheit nach Anspruch 1 oder 2, **dadurch gekennzeichnet, dass** die erste Ventileinrichtung bei Fehlen des Signals so betreibbar ist, dass es Druckströmungsmittel von dem hydraulischen Versorgungssystem (2) ermöglicht wird, zu einem Tank (22) zu strömen.

4. Bremseinheit nach einem der vorhergehenden Ansprüche, **dadurch gekennzeichnet, dass** die erste Ventileinrichtung (14) bei Vorhandensein des Signals so betreibbar ist, dass Druckströmungsmittel von dem hydraulischen Versorgungssystem (2) an einem Strömen zu einem Tank (22) gehindert wird.

5. Fahrzeug nach einem der vorhergehenden Ansprüche, **dadurch gekennzeichnet, dass** die erste Ventileinrichtung (14) eine Trageinrichtung (15, 17) und einen Schieber (38) umfasst, der entlang der Trageinrichtung (15, 17) zwischen einer geschlossenen Stellung, in der das hydraulische Versorgungssystem (2) hydraulisch von der ersten Bremsbaugruppe (12) getrennt ist, und einer offenen Stellung bewegbar ist, in der das hydraulische System (2) mit der ersten Bremsbaugruppe (12) in Verbindung steht.

6. Fahrzeug nach Anspruch 5, **dadurch gekennzeichnet, dass** der Schieber (38) zusammen mit der Trageinrichtung (15, 17) zumindest eine erste (45) und eine zweite (49) Kammer bildet, die mit dem hydraulischen Versorgungssystem (2) in Verbindung stehen, wenn sich der Schieber (38) in der offenen Stellung befindet.

7. Fahrzeug nach Anspruch 8, **dadurch gekennzeichnet, dass** wenn sich der Schieber (38) in der offenen Stellung befindet, das Druckströmungsmittel in der ersten (45) und der zweiten (49) Kammer den Schieber (38) zwischen der offenen und der geschlossenen Stellung mit einer ersten bzw. einer zweiten Schubkraft bewegt, wobei die erste (45) und die zweite (49) Kammer so ausgelegt sind, dass die erste Schubkraft größer als die zweite Schubkraft ist.

8. Fahrzeug nach einem der vorhergehenden Ansprüche, **dadurch gekennzeichnet, dass** die zweite Bremsbaugruppe (5) ein weiteres Druckströmungsmittel an die erste Ventileinrichtung (14) liefert, wobei die erste Ventileinrichtung (14) so konfiguriert ist, dass sie verhindert, dass das Druckströmungsmittel und das weitere Druckströmungsmittel miteinander in Kontakt kommen.

9. Fahrzeug nach Anspruch 4 und irgendeinem direkt oder indirekt hiervon abhängigen Anspruch, **dadurch gekennzeichnet, dass** bei Vorhandensein des Signals das Druckströmungsmittel von dem hydraulischen Versorgungssystem betreibbar ist, um die erste Ventileinrichtung in einen Zustand zu Zuführen des Druckströmungsmittels an die erste Bremsbaugruppe (12) zu bringen.

10. Verfahren zum Bremsen eines selbstfahrenden Fahrzeuges, das eine Bremseinheit nach Anspruch 1 einschließt, wobei das Fahrzeug Folgendes umfasst:
- zwei Achsen (3,4), die jeweils zumindest ein Rad aufweisen;
- zweite Ventileinrichtungen (9), die einer zweiten (5) der Bremsbaugruppen (12, 5) zugeordnet sind; und
**dadurch gekennzeichnet, dass** das Verfahren die folgenden Schritte umfasst:
- Betätigen der zweiten (5) der Bremsbaugruppen (12, 5);
- Erzeugen eines Signals mit Hilfe der zweiten Ventileinrichtung (9);
- Zuführen des Druckströmungsmittels über die erste Ventileinrichtung (14) an die erste Bremsbaugruppe (12) in Abhängigkeit von dem Signal; und
- während des Zuführungsschrittes, Fortsetzen der Zuführung von Druckströmungsmittel an die Anzahl von Nutzeinrichtungen.

11. Verfahren nach Anspruch 10, **dadurch gekennzeichnet, dass** der Zuführungsschritt die weiteren folgenden Schritte umfasst:
- Sperren des Rücklaufflusses des Druckströmungsmittels zu einem Tank (22) über die ersten Ventileinrichtung (14);
- Ermöglichen, dass das Druckströmungsmittel einen Druck im Inneren der ersten Ventileinrichtung (14) aufbaut; und
- Öffnen der ersten Ventileinrichtung (14) mit Hilfe des aufgebauten Druckes zum Zuführen des Druckströmungsmittels an die erste Bremsbaugruppe (12).

## Revendications

1. Assemblage de freinage pour un véhicule automoteur, le véhicule comportant deux essieux (3, 4) dont chacun possède au moins une roue; cet assemblage de freinage comportant:
- un premier et un second assemblage (12, 5) de freinage, un pour chacun desdits essieux respectifs (3, 4); chaque assemblage de freinage comportant un organe de frein associé à chaque dite roue, et ledit second assemblage de freinage (5) comportant un premier et un second dispositif de pédales (5a) actionnés par l'opérateur;
- un système hydraulique utilitaire (2) pour fournir un fluide pressurisé à plusieurs dispositifs fonctionnels, distincts de l'assemblage de freinage;
- des premiers moyens de soupapes (14) pour alimenter directement ledit fluide pressurisé vers ledit premier assemblage de freinage (12) en réponse à un signal produit par ledit second assemblage de freinage (5); ledit signal étant produit suite à une activation généralement simultanée desdits premier et second dispositifs de pédales (5a) actionnés par l'opérateur; et
- desdits premiers moyens de soupapes (14) dont la fonction est d'alimenter ledit fluide pressurisé vers ledit premier assemblage de freinage (12) sans interrompre l'alimentation en fluide pressurisé vers lesdits plusieurs dispositifs fonctionnels.

2. Assemblage de freinage selon la revendication 1, **caractérisé en ce que** chaque dit essieu (3, 4) possède une paire de roues; des seconds moyens de soupapes (9) étant interposés entre ledit premier (12) et ledit second (5) assemblages de frein pour produire ledit signal lorsque lesdits deux dispositifs de pédales (5a) sont activés.

3. Assemblage de freinage selon la revendication 1 ou 2, **caractérisé en ce que** lesdits premiers moyens de soupapes (14) sont destinés, en l'absence dudit signal, à permettre au fluide pressurisé de s'écouler du système hydraulique utilitaire (2) vers un réservoir (22).

4. Assemblage de freinage selon l'une quelconque des revendications précédentes, **caractérisé en ce que** lesdits premiers moyens de soupapes (14) sont destinés, en présence dudit signal, à éviter que le fluide pressurisé ne s'écoule du système hydraulique utilitaire (2) vers un réservoir (22).

5. Véhicule selon l'une quelconque des revendications précédentes, **caractérisé en ce que** lesdits premiers moyens de soupapes (14) comprennent des moyens de support (15, 17); et une coulisse (38) mobile, le long des moyens de support (15, 17), entre une position fermée à laquelle ledit système hydraulique utilitaire (2) est séparé hydrauliquement dudit premier assemblage de freinage (12), et une position ouverte dans laquelle le système hydraulique (2) communique avec le premier assemblage de freinage (12).

6. Véhicule selon la revendication 5, **caractérisé en ce que** ladite coulisse (38) définit, avec lesdits moyens de support (15, 17), au moins une première (45) et une seconde (49) chambres communiquant avec ledit système hydraulique utilitaire (2) lorsque la coulisse (38) se trouve en position ouverte.

7. Véhicule selon la revendication 6, **caractérisé en ce que**, lorsque ladite coulisse (38) se trouve en position ouverte, le fluide pressurisé présent dans ladite première (45) et ladite seconde (49) chambres déplace la coulisse (38) entre la position ouverte et la position fermée avec respectivement une première et une seconde butées; ladite première (45) et ladite seconde (49) chambres étant conçues de manière à ce que ladite première butée est plus grande que ladite seconde butée.

8. Véhicule selon l'une quelconque des revendications précédentes, **caractérisé en ce que** ledit second assemblage de freinage (5) fournit un autre fluide pressurisé auxdits premiers moyens de soupapes (14); les premiers moyens de soupapes (14) étant configurés pour éviter que ledit fluide pressurisé et ledit autre fluide pressurisé n'entrent mutuellement en contact.

9. Véhicule selon la revendication 4 et à toute revendication en dépendant directement
ou indirectement, **caractérisé en ce que**, en présence dudit signal, le fluide pressurisé dudit système hydraulique utilitaire est destiné à amener lesdits premiers moyens de soupapes dans une situation afin d'alimenter ledit fluide pressurisé dans ledit premier assemblage de freinage (12).

10. Méthode de freinage d'un véhicule automoteur, comprenant un assemblage de freinage tel que dans la revendication 1, ledit véhicule comportant :
- deux essieux (3,4), dont chacun possède au moins une roue;
- un second moyen de soupape (9) associé avec un second (5) desdits assemblages de freins (12, 5) et
**caractérisé en ce que** la méthode comporte les étapes suivantes :
- l'activation dudit second (5) desdits assemblages de freins (12, 5);
- la production d'un signal au moyen desdits seconds moyens de soupapes (9);
- l'alimentation dudit fluide pressurisé à travers lesdits premiers moyens de soupapes (14) vers ledit premier assemblage de freinage (12) en réponse audit signal; et
- pendant ladite étape d'alimentation, la poursuite de l'alimentation de fluide pressurisé auxdits plusieurs dispositifs fonctionnels.

11. Méthode selon la revendication 10, **caractérisée en ce que** ladite étape d'alimentation comporte les autres étapes :
- de blocage du débit de retour de fluide pressurisé vers un réservoir (22) à travers lesdits premiers moyens de soupapes (14);
- d'autorisation dudit fluide pressurisé d'accumuler de la pression à l'intérieur desdits premiers moyens de soupapes (14); et
- d'ouverture desdits premiers moyens de soupapes (14) au moyen de la pression accumulée pour alimenter ledit fluide pressurisé vers ledit premier assemblage de freinage (12).
